# EUROPEAN PATENT APPLICATION

(11) **EP 3 244 320 A1**
(43) Date of publication of application: **15.11.2017**
(21) Application number: 15876703.8
(22) Date of filing: 29.12.2015
(51) Int. Cl.: G06F 17/30

(54) **FILE PATH STORING AND LOCAL FILE ACCESSING METHOD AND DEVICE**

(30) Priority: 06.01.2015 CN 201510004642
(71) Applicant: Alibaba Group Holding Limited, Grand Cayman (KY)
(72) Inventor: ZHU, Qin, Hangzhou Zhejiang 311121 (CN); ZHOU, Jingwen, Hangzhou Zhejiang 311121 (CN)
(74) Representative: Wilson, Alan Stuart
(86) International application number: PCT/CN2015/099539
(87) International publication number: WO 2016/110203

(57) **Abstract**

The present application discloses methods and apparatuses for file path storage and local file access, to improve the efficiency of accessing local files. The method monitors local files in different storage areas, with the different storage areas including storage areas corresponding to different applications APPs. The method obtains file paths of the monitored local files, and stores the file paths in a preset storage area. The method obtains the file paths from the preset storage area when an instruction of acquiring local files inputted by a user is received, and accesses the local files corresponding to the file paths. As such, a terminal can directly access the local files corresponding to the file paths based on the file paths that are stored in the preset storage area, thus effectively improving the efficiency of accessing the local files

## Description

### Technical Field

The present application relates to the field of computer technologies, and in particular, to methods and apparatuses for storing a file path and accessing a local file.

### Background

With the rapid development of mobile Internet technology, a user can conduct various types of social activities through a mobile terminal. In social activities, a user may often obtain a local file in a storage area corresponding to another application (APP) in a current APP during a social activity, upload the obtained local file to a server, and share the local file with others. This requires the current APP to access the local file in the storage area corresponding to the other APP, in order to upload the accessed local file to the server.

In existing technologies, different APPs correspond to different storage areas, and the storage areas are used for storing local files and file paths of the APPs respectively. At present, in order to ensure information security, all APPs cannot directly access storage areas of other APPs. In other words, all the APPs cannot directly access local files and file paths stored in the storage areas of the other APPs, but first access the other APPs and then access the storage areas through the other APPs.

For example, assuming that an image APP and a social APP are installed on a terminal, and images (local files) being stored in a storage area corresponding to the image APP. When a user needs to add a certain image in the image APP to the social APP and share the image with others, the social APP can only access the image APP first, and the image APP acquires the image in the storage area therein, and provides the acquired image to the social APP.

Apparently, when local files are accessed using a method provided in the existing technologies, local files provided by an APP are accessible only after the APP is accessed first. The efficiency of accessing local files is relatively low. This is especially true when a user needs to acquire local files corresponding to different first APPs through a second APP at the same time, and the local files need to be obtained sequentially from the first APPs. Apparently, the efficiency of accessing the local files corresponding to the first APPs by a terminal is relatively low.

### Summary

Embodiments of the present application provide file path storage and local file access methods and apparatuses, to improve the efficiency of accessing local files and enhance the convenience of user operations.

The embodiments of the present application provide a file path storage method, which includes monitoring local files in different storage areas, the different storage areas including respective storage areas corresponding to different applications APPs; acquiring file paths of the monitored local files; and storing the file paths in a preset storage area.

The embodiments of the present application provide a local file access method, which includes acquiring pre-stored file paths from a preset storage area in response to receiving an instruction of acquiring local files inputted by a user, the preset storage area being independent of storage areas corresponding to various applications APPs; and accessing the local files corresponding to the file paths according to the file paths.

The embodiments of the present application provide a file path storage apparatus, which includes a monitoring module configured to monitor local files in different storage areas, the different storage areas including respective storage areas corresponding to different applications APPs; an acquisition module configured to acquire file paths of the monitored local files; and a storage module configured to store the file paths in a preset storage area.

The embodiments of the present application provide a local file access apparatus, which includes an acquisition module configured to acquire pre-stored file paths from a preset storage area in response to receiving an instruction of acquiring local files inputted by a user, the preset storage area being independent of storage areas corresponding to various applications APPs; and an access module configured to access the local files corresponding to the file paths according to the file paths.

The embodiments of the present application provide methods and apparatuses for storing file paths and accessing local files. The method monitors local files in different storage areas, with the different storage areas including storage areas corresponding to different applications APPs. The method obtains file paths of the monitored local files, and stores the file paths in a preset storage area. The method obtains the file paths from the preset storage area when an instruction of acquiring local files inputted by a user is received, and accesses the local files corresponding to the file paths directly, without the need to access APPs corresponding to the file paths, thus effectively improving the efficiency of accessing the local files.

### Brief Description of the Drawings

Accompanying drawings described herein are intended to provide a further understanding of the present application, and form a part of the present application. Exemplary embodiments of the present application and descriptions thereof are used for explaining the present application, but do not impose any improper limitations to the present application. In the drawings:
FIG. 1 is a schematic flowchart of a file path storage method according to an embodiment of the present application.
FIG. 2 is a schematic flowchart of a local file access method according to an embodiment of the present application.
FIG. 3 is a schematic diagram of a page presented by an APP on a terminal according to an embodiment of the present application.
FIG. 4 is a schematic diagram of accessed local files presented by a terminal according to an embodiment of the present application.
FIG. 5 is a schematic structural diagram of a file path storage apparatus according to an embodiment of the present application.
FIG. 6 is a schematic structural diagram of a local file access apparatus according to an embodiment of the present application.

### Detailed Description

In existing technologies, two APPs cannot directly access each other's local files, but need to first access the opposite APP and then access the local files through the opposite APP. In existing technologies, an operating system of a terminal can monitor local files of various APPs and can acquire file paths of the local files. Therefore, in the embodiments of the present application, a terminal may monitor local files of different storage areas corresponding to various APPs to acquire file paths of the local files through an operating system thereof, and store the file paths of the local files of the APPs in a preset storage area. When receiving an instruction of acquiring a local file inputted by a user, the terminal acquires a file path from the preset storage area, and directly accesses the corresponding local file according to the acquired file path without accessing a respective APP corresponding to the local file, thus effectively improving the efficiency of accessing local files.

In order to make the objectives, technical solutions, and advantages of the present application more clearly, the technical solutions of the present application will be described hereinafter in a clear and comprehensive manner in combination with particular embodiments of the present application and relevant accompanying drawings. Apparently, the described embodiments represent merely some and not all of the embodiments of the present application. All other embodiments obtained by one of ordinary skill in the art based on the embodiments in the present application without making any creative effort shall all belong to the scope of protection of the present application.

A file path storage method and a local file access method according to the embodiments of the present application are described in detail hereinafter with reference to the accompanying drawings.

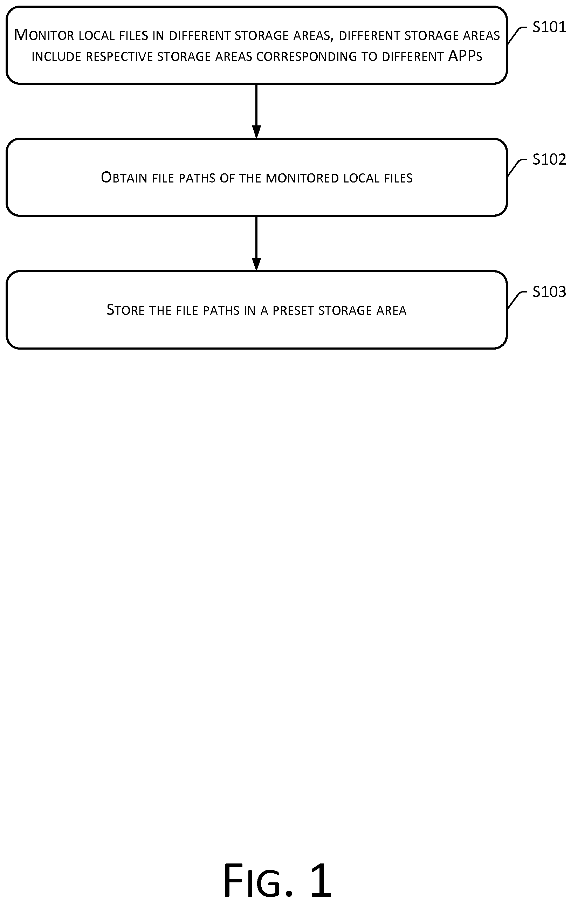

FIG. 1 shows a file path storage method according to an embodiment of the present application, which specifically includes the following operations.

S101 monitors local files in different storage areas.

In the embodiments of the present application, the different storage areas include respective storage areas corresponding to different APPs. The APPs may include an APP built in an operating system of a terminal, and may also include a third-party APP installed on the terminal.

In the embodiments of the present application, the terminal may monitor local files in storage areas corresponding to various APPs installed thereon. Specifically, the terminal may monitor the local files via an operating system thereof. The operating system includes, but is not limited to, an Android Operating System, an Iphone Operating System (IOS), etc.

For example, an image APP and a music APP may be installed on the terminal, and the image APP and the music APP correspond to a storage area 1 and a storage area 2 respectively. Accordingly, the terminal may monitor images and music stored in the storage area 1 and the storage area 2.

Taking into account of different application scenarios, the types of local files that the terminal needs to monitor may be different, and operation times of the local files may also be different.

Therefore, in the embodiments of the present application, file types and operation times of local files to be monitored may be preset according to different application scenarios, and the terminal may monitor a designated type of local files. The designated type of local files includes, but is not limited to, at least one of media files such as image, audio, and video, or text files in formats such as txt, pdf, and doc, etc. The terminal may further monitor local files having specific operation times. Specifically, the terminal may further monitor operation times of local files in different storage areas, determine operation times that fall within a preset time period (a specific operation time), and determine local files corresponding to the operation times that fall within the preset time period as the monitored local files in the different storage areas.

In a real application scenario, when a user performs an operation on a local file in a storage area of an APP, a terminal may record an operation log, and store the operation log in the storage area. The operation log at least includes a time of the operation, a type of the operation, etc. The terminal may then monitor times of operation in the operation log.

Generally, operations on a local file may include an operation such as browsing, updating, downloading, and creating the local file, etc. Then, the operation time described in the embodiments of the present application may include at least one of a browsing time, n update time, a download time, a creation time, etc., associated with the local file.

For example, if the file types of the local files to be monitored are preset as image and music, the operation type of the local files to be monitored is preset as browsing, and the operation time is preset as the latest week (i.e., a time difference between times of operation and the current time being not more one week), the terminal monitors images and music which were browsed in the latest week in the storage area 1 and the storage area 2 corresponding to the image APP and the music APP respectively, when monitoring local files in various storage areas.

In the above example, if an image A in the storage area 1 and a song B in the storage area 2 were browsed, the terminal may monitor browsing times of the image A and the song B, and determine whether the browsing times of the image A and the song B fall within the time period of the latest week respectively. If affirmative, the terminal may determine that the image A (or the song B) corresponding to the browsing time(s) is/are monitored local file(s) in different storage areas. Otherwise, the terminal may determine that the image A (or the song B) corresponding to the browsing time(s) do(es) not belong to the monitored local file(s) in the different storage areas.

It should be noted that the terminal of the present application may monitor whether there exists a local file that is currently operated in real time, or may monitor whether there exists a local file that has been operated in each preset time interval, which is not specifically limited herein.

S102 obtains file paths of the monitored local files.

In the embodiments of the present application, file paths of the monitored local files may be specifically acquired through an operating system of the terminal.

In a real application scenario, a local file in a storage area corresponds to a file path. Generally, after the terminal determines a storage area where a local file is located, a file path of the local file is also determined. In addition, when a user performs an operation on the local file, the terminal may generate an operation log, and the operation log may often record a file path through which the local file is operated.

In the embodiments of the present application, when the file path of the monitored local file is acquired, the terminal may determine the file path of the local file according to the storage area of the local file. In order to facilitate acquisition, the terminal may further directly acquire the file path of the local file from the operation log.

For example, upon detecting the image A and the song B in the storage area 1 and the storage area 2 corresponding to the image APP and the music APP respectively, the terminal may determine a file path corresponding to the storage area 1 and determine a file path corresponding to the storage area 2. For example, if the storage area 1 is a y folder of a disk X, the terminal may determine that the file path corresponding to the storage area 1 is X:\y. If the user has recently browsed the image A and the song B, the terminal may acquire respective file paths corresponding to the image A and the song B from the operation log.

S103 stores the file paths in a preset storage area.

The preset storage area in the present application is independent of the storage areas corresponding to the APPs. The preset storage area is used for storing file paths of local files that are monitored by the terminal, and the preset storage area includes, but is not limited to, a storage area such as a cache, a memory, and a disk in the terminal.

The file paths of the local files corresponding to different APPs that are obtained at S102 can be stored in the preset storage area. For example, file paths corresponding to images and music that correspond to an image APP and a music APP can be stored in the preset storage area. Once the operating system of the terminal acquires a storage path of a local file corresponding to another APP, the local file can be directly accessed according to the file path, without the need of accessing the APP corresponding to the local file.

In other words, in the method as shown in FIG. 1 of the present application, an operating system of a terminal monitors local files in different storage areas, acquires file paths of the monitored local files, and stores the file paths corresponding to the local files in the different storage areas in a preset storage area. When an APP needs to access local files corresponding to one or more other APPs, the local files may be directly accessed through the preset storage area in which access paths are stored, without the need to access the APPs corresponding to the local files. Thus, the efficiency of accessing the local files can be improved.

In the present application, the maximum number of file paths that can be stored in the preset storage area may be set according to an actual requirement (e.g., the number may be set according to different application scenarios).

It should be noted that the terminal may regularly delete file paths of local files with operation times that do not fall within a preset time period from the preset storage area, in order to ensure having an enough space to store file paths at subsequent times. In other words, only file paths of local files within the preset time period are stored in the preset storage area. In this way, the terminal may obtain file paths from the preset storage area when the file paths are needed to be obtained. For example, if the preset time period is the latest week, , only file paths of local files having operation times within the latest week at the current moment are maintained, and file paths of local files with operation times that are prior to the latest week are deleted. When file paths are needed to be obtained, the terminal may acquire the file paths of the local files having operation times that fall within the latest week.

In the embodiments of the present application, when an APP in the terminal needs to access a local file corresponding to another APP, a pre-stored file path of the local file can be acquired from a preset storage area according to the above embodiment of the present application, and the corresponding local file is directly accessed according to the acquired file path. The local file access method according to the embodiments of the present application will be described in detail herein.

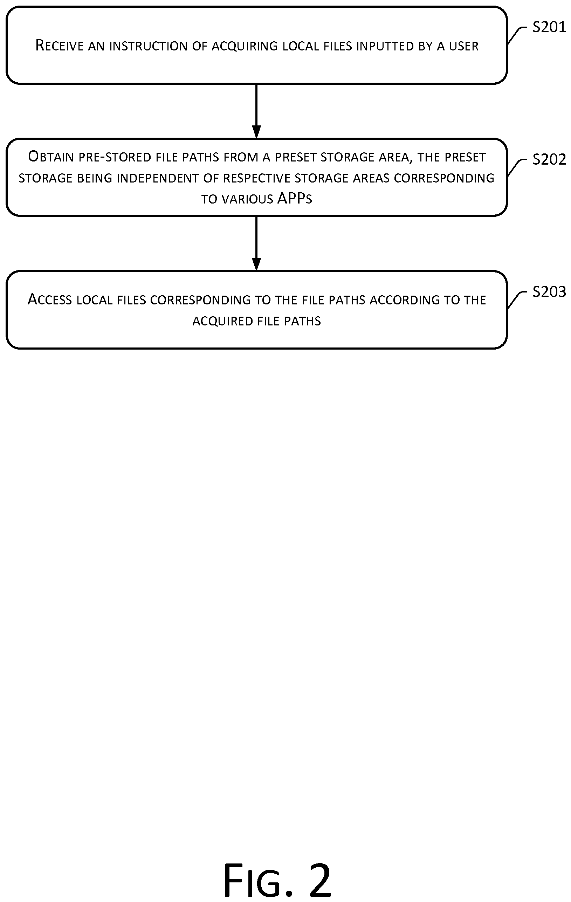

FIG. 2 shows a local file access method according to an embodiment of the present application, which specifically includes the following operations.

S201 receives an instruction of acquiring local files inputted by a user.

In the embodiments of the present application, the instruction of acquiring local files may be an audio instruction or a text instruction inputted by the user, or an instruction inputted by the user through a related button on a page.

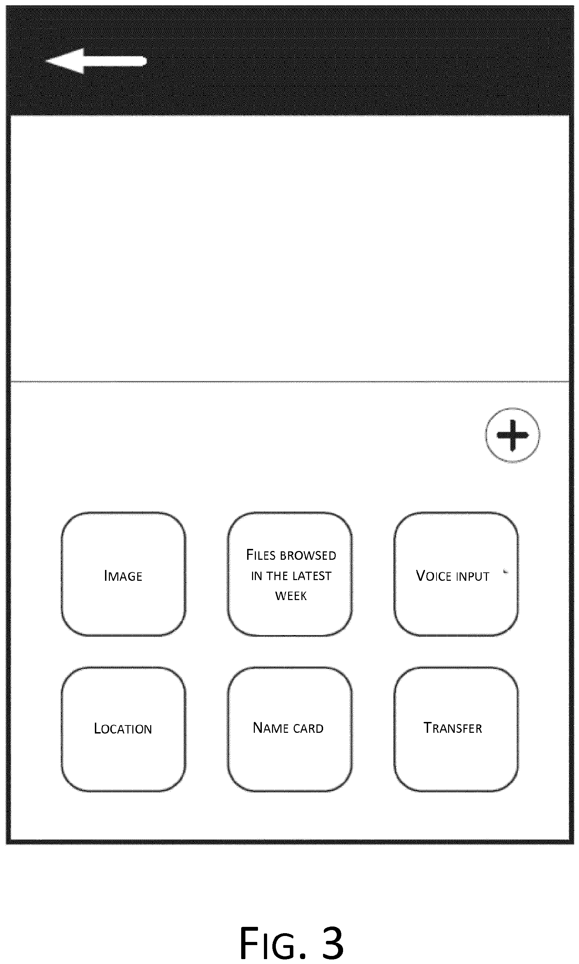

For example, assuming that an image A is stored in a storage area 1, a song B is stored in a storage area 2, and a pdf file C is stored in a storage area C. The image A, the song B, and the pdf file C are local files that are browsed by a user. A file path 1, a file path 2, and a file path 3 correspond to the image A, the song B, and the pdf file C respectively, and are all stored in a preset storage area. When the user starts a social APP installed in the terminal and needs to send the image A, the song B, and the pdf file C that the user has browsed recently to a server, the user may click a button of acquiring local files on a page presented by the social APP. Accordingly, the terminal may receive an instruction of acquiring local files inputted by the user. FIG. 3 shows a page presented by the social APP on the terminal. The page includes multiple buttons for inputting instructions, which specifically include buttons for image, file, location, voice input, etc. In the embodiments of the present application, the user may click a file button as shown in FIG. 3, and the terminal may receive a corresponding instruction. The instruction is an instruction inputted by the user to obtain local files. Alternatively, the user may also click a voice input button as shown in FIG. 3. The user may then input an audio instruction to the terminal, and the terminal may receive the audio instruction. The audio instruction is an instruction inputted by the user to obtain local files.

S202 obtains pre-stored file paths from a preset storage area.

In response to receiving the instruction of acquiring local files inputted by the user at S201, the terminal acquires pre-stored file paths from a preset storage area.

Following the above example, if the instruction of acquiring local files inputted by the user is received, the terminal may acquire the file path 1, the file path 2, and the file path 3 from the preset storage area.

S203 accesses local files corresponding to the file paths according to the acquired file paths.

Continue with the above example, the terminal may access the image A, the song B, and the pdf file C in the different storage areas according to the file path 1, the file path 2, and the file path 3 that are acquired at the same time.

Apparently, in the embodiments of the present application, when inputting an instruction for acquiring local files, the user may further specifically input an instruction of acquiring a designated type of local files. For example, the user may input an instruction of acquiring media files or text files that are browsed in the latest week (within a preset time period). If the terminal receives an instruction inputted by the user to acquire media files that are browsed in the latest week, the terminal may only acquire the file path 1 and the file path 2 corresponding to the image A and the song B respectively from the preset storage area, and directly access the image A and the song B according to the file path 1 and the file path 2, because the image A and the song B are media files and the pdf file C is not a media file. If the terminal receives an instruction inputted by the user to acquire text files that are browsed in the latest week, the terminal may acquire the file path 3 of the pdf file C that is recently browsed from the preset storage area, and directly access the pdf file C according to the file path 3, because the pdf file C is a text file and the image A and the song B are not text files.

In the method shown in FIG. 2, in response to receiving an instruction of acquiring local files inputted by a user, a terminal directly acquires file paths from a preset storage area, and directly accesses local files corresponding to the file paths without accessing APPs corresponding to the local files, thus effectively improving the efficiency of accessing the local files. This is especially true when file paths corresponding to local files of different APPs are stored in the preset storage area, the terminal may directly access the local files of the different APPs according to the file paths, without accessing the APPs one by one to access local files provided by each APP. Apparently, the efficiency of accessing the local files is improved.

The method that is shown in FIG. 2 in the embodiments of the present application can be performed by an APP installed on a terminal.

In the embodiments of the present application, in order to facilitate the user to select one or more local files from the local files that are accessed by the terminal and send the one or more local files to a server for sharing with others, file identifiers corresponding to the local files may be presented when the terminal accesses the local files corresponding to the file paths in the preset storage area.

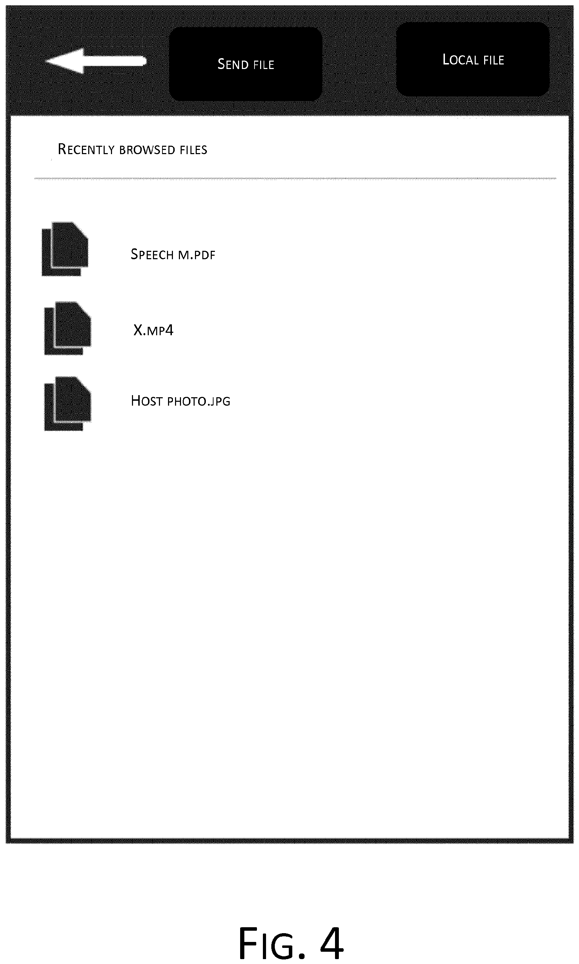

In the embodiments of the present application, the file identifiers may be file names of the local files, screenshots of the local files, or the like. For example, after accessing the image A, the terminal may present a screenshot of the image A to the user. For another example, after accessing the image A, the song B, and the pdf file C, the terminal may present file names of the image A, the song B, and the pdf file C to the user in a form of a list, as shown in FIG. 4.

In FIG. 4, "speech m.pdf" is the file name of the pdf file C, "x.mp4" is the file name of the song B, and "host photo.jpeg" is the file name of the image A. Then the user may click a file name (a file identifier) as shown in FIG. 4 to select at least one of the image A, the song B, and the pdf file C to be sent to the server, in order to send the selected one/ones to the server.

In the embodiments of the present application, after taking into account of the likelihood that the user preferentially accesses local files having operation times are closer to the current time is relatively high in an actual application scenario, file identifiers of the accessed local files may be presented according to operation times when the file identifiers are displayed. Specifically, the terminal may first determine operation times of the accessed local files, determine a respective time difference between a respective operation time and a current time for each determined operation time, order file identifiers of the local files corresponding to the time differences according to an ascending order of the time differences, and present the ordered file identifiers. In other words, the closer an operation time with respect to the current time is, the higher a respective rank is, and the farther the operation time from the current time is, the lower the respective rank is. In this way, when a local file with an operation time that is closest to the current time is needed to be accessed, the user may access the corresponding local file through a file identifier that is ordered at the front, thus improving the convenience of user operations.

Following the above example, assuming that the current time is December 1, 2014, the terminal may first determine that operation times of the image A, the song B, and the pdf file C that are accessed are November 27, 2014, November 28, 2014, and November 29, 2014 respectively. The terminal may determine that respective time differences of November 27, 2014, November 28, 2014, and November 29, 2014 with respect to December 1, 2014 are 4 days, 3 days, and 2 days, and order the accessed local files according to an ascending order of the time differences (i.e., 2 days, 3 days, and 4 days). An order of the file names after the ordering is "speech m.pdf", "x.mp4", and "host photo.jpeg". The three ordered file names are presented to the user, and file identifiers of the local files are presented as shown in FIG. 4.

In the embodiments of the present application, as the file paths in the preset storage area may be multiple types of local files (which may be media files and/or text files, for example), the terminal may acquire file paths of local files of the multiple types, and present file identifiers of the corresponding local files, so that the user can select the file identifiers of local files of the multiple types at the same time, send local files of the corresponding types to a server, and share the local files with others.

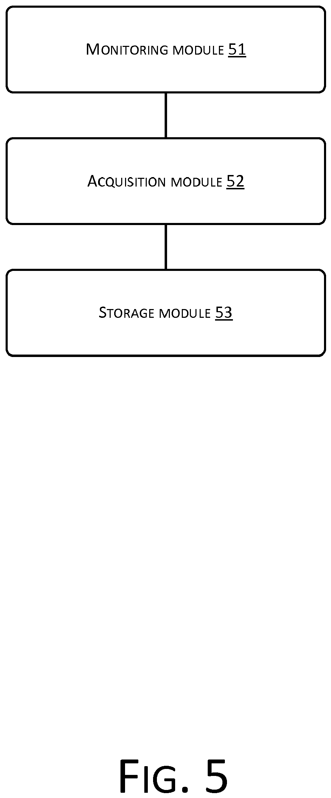

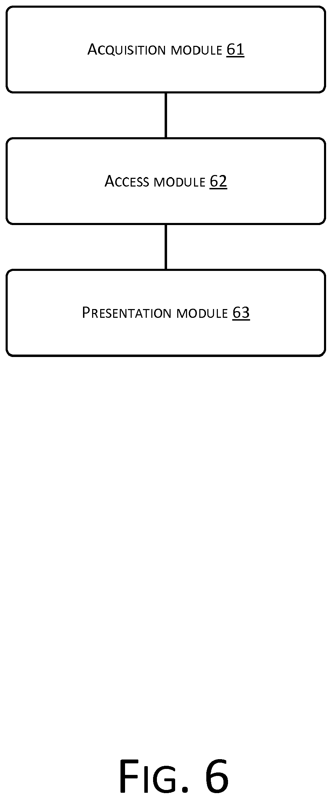

The above are the file path storage method and the local file access method according to the embodiments of the present application. Based on the same ideas, the embodiments of the present application further provide a file path storage apparatus and a local file access apparatus, as shown in FIG. 5 and FIG. 6.

FIG. 5 shows a file path storage apparatus according to an embodiment of the present application, which includes a monitoring module 51 configured to monitor local files in different storage areas, the different storage areas including respective storage areas corresponding to different applications APPs; an acquisition module 52 configured to acquire file paths of the monitored local files; and a storage module 53 configured to store the file paths in a preset storage area.

Optionally, the monitoring module 51 is specifically configured to monitor operation times of the local files in the different storage areas, determine operation times that fall within a preset time period from among the monitored operation times, and determine local files corresponding to the operation times that fall within the preset time period as the monitored local files in the different storage areas.

Optionally, the operation times include at least one of respective times of browsing, respective times of update, respective times of download, and respective times of creation of the local files.

Optionally, the monitoring module 51 is specifically configured to monitor local files of a designated type in the different storage areas, wherein local files of the designated type includes media files and/or text files.

FIG. 6 shows a local file access apparatus according to an embodiment of the present application, which includes an acquisition module 61 configured to acquire pre-stored file paths from a preset storage area in response to receiving an instruction of acquiring local files inputted by a user, the preset storage area being independent of respective storage areas corresponding to various applications APPs; and an access module 62 configured to access the local files corresponding to the file paths according to the file paths.

Optionally, the apparatus further includes a presentation module 63 configured to present file identifiers of the accessed local files.

Optionally, the presentation module 63 is specifically configured to determine operation times of the accessed local files, determine respective time differences between the operation times and a current time for the determined operation times, order the file identifiers of the local files according to an ascending order of the time differences, and display the ordered file identifiers.

Optionally, the file paths in the preset storage area are file paths of local files of a designated type, and local files of the designated type includes media files and/or text files.

In the file path storage method and the local file access method according to the embodiments of the present application, the terminal may monitor local files in different storage areas, acquire file paths of the monitored local files, store the file paths in a preset storage area. Upon receiving an instruction of acquiring local files inputted by a user, the terminal may acquire the file paths that are stored in advance from the preset storage area, and access the local files corresponding to the file paths according to the file paths. In this way, the terminal may directly access the local files corresponding to the file paths according to the file paths stored in the preset storage area, thus effectively improving the efficiency of accessing the local files.

One skilled in the art should understand that the embodiments of the present application may be provided as a method, a system, or a computer program product. Therefore, the present application may employ a form of a complete hardware embodiment, a complete software embodiment, or an embodiment that is a combination of software and hardware. Moreover, the present application may be in a form of a computer program product implemented on one or more computer usable storage media (including, but not limited to, a magnetic disk memory, a CD-ROM, an optical memory, and the like) that include computer usable program codes.

The present disclosure is described with reference to flowcharts and/or block diagrams of the methods, devices (systems), and computer program products according to the embodiments of the present disclosure. It should be understood that computer program instructions may be used to implement each process and/or block in the flowcharts and/or block diagrams and a combination of process(es) and/or block(s) in the flowcharts and/or the block diagrams. These computer program instructions may be provided to a general-purpose computer, a special-purpose computer, an embedded processor, or a processor of another programmable data processing device to generate a machine, so that the instructions executed by a computer or a processor of another programmable data processing device generate an apparatus for implementing function(s) specified in one or more processes in the flowcharts and/or in one or more blocks in the block diagrams.

These computer program instructions may also be stored in a computer readable storage device that can instruct a computer or another programmable data processing device to perform operations in a particular manner, such that the instructions stored in the computer readable storage device generate an article of manufacture that includes an instruction apparatus. The instruction apparatus implements function(s) that is/are specified in one or more processes in the flowcharts and/or in one or more blocks in the block diagrams.

These computer program instructions may also be loaded onto a computer or another programmable data processing device, such that a series of operations are performed on the computer or the other programmable device, thereby generating computer-implemented processing. Therefore, the instructions executed on the computer or the other programmable device provide a procedure for implementing function(s) specified in one or more processes in the flowcharts and/or in one or more blocks in the block diagrams.

In a typical configuration, a computing device includes one or more processors (CPU), an input/output interface, a network interface, and memory.

The memory may include a form of computer readable media such as a volatile memory, a random access memory (RAM) and/or a non-volatile memory, for example, a read-only memory (ROM) or a flash RAM. The memory is an example of a computer readable media.

The computer readable media may include a volatile or non-volatile type, a removable or non-removable media, which may achieve storage of information using any method or technology. The information may include a computer-readable instruction, a data structure, a program module or other data. Examples of computer storage media include, but not limited to, phase-change memory (PRAM), static random access memory (SRAM), dynamic random access memory (DRAM), other types of random-access memory (RAM), read-only memory (ROM), electronically erasable programmable read-only memory (EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer readable media does not include transitory media, such as modulated data signals and carrier waves.

It should further be noted that terms "include", "comprise", or any variants thereof are intended to cover a non-exclusive inclusion, such that a process, a method, a product or a device that includes a series of elements not only includes such elements but also includes other elements not specified expressly, or may further include inherent elements of the process, method, product, or device. Without further restrictions, an element defined by a phrase "include a/an..." does not exclude other same elements to exist in a process, method, product, or device that includes the element.

One skilled in the art should understand that the embodiments of the present disclosure may be provided as a method, a system, or a computer program product. Therefore, the embodiments of the present disclosure may be implemented in a form of a complete hardware embodiment, a complete software embodiment, or an embodiment that is a combination of software and hardware. Moreover, the embodiments of the present disclosure may employ a form of a computer program product implemented on one or more computer usable storage media (including, but not limited to, a magnetic disk memory, a CD-ROM, an optical memory, and the like) that includes a computer usable program code.

The foregoing descriptions are merely embodiments of the present disclosure, which are not intended to limit the present disclosure. For one skilled in the art, the present disclosure can have various modifications and changes. Any modifications, equivalent replacements, and improvements made without departing from the spirit and principles of the present disclosure shall be included in the scope of the claims of the present disclosure.

## Claims

1. A file path storage method comprising:
monitoring local files in different storage areas, the different storage areas comprising respective storage areas corresponding to different applications APPs;
acquiring file paths of the monitored local files; and
storing the file paths in a preset storage area.

2. The method of claim 1, wherein monitoring the local files in the different storage areas comprises:
monitoring respective operation times of the local files in the different storage areas;
determining operation times that fall within a preset time period in the monitored operation times; and
determining local files corresponding to the operation times that fall within the preset time period as the monitored local files in the different storage areas.

3. The method of claim 2, wherein the respective operation times comprises at least one of respective times of browsing, respective times of update, respective times of download, and respective times of creation of the local files.

4. The method of claim 1, wherein monitoring the local files in the different storage areas comprises monitoring local files of a designated type in the different storage areas, wherein the local files of the designated type comprise media files and/or text files.

5. A local file access method comprising:
acquiring pre-stored file paths from a preset storage area in response to receiving an instruction of acquiring local files inputted by a user, the preset storage area being independent of storage areas corresponding to applications APPs; and
accessing the local files corresponding to the file paths according to the file paths.

6. The method of claim 5, wherein the method further comprises presenting file identifiers of the accessed local files.

7. The method of claim 6, wherein presenting the file identifiers of the accessed local files comprises:
determining operation times of the accessed local files;
determining respective time differences between the operation times and a current time for the determined operation times;
ordering the file identifiers of the local files according to an ascending order of the time differences; and
presenting the ordered file identifiers.

8. A file path storage apparatus comprising:
a monitoring module configured to monitor local files in different storage areas, the different storage areas comprising respective storage areas corresponding to different applications APPs;
an acquisition module configured to acquire file paths of the monitored local files; and
a storage module configured to store the file paths in a preset storage area.

9. The apparatus of claim 8, wherein the monitoring module is configured to monitor operation times of the local files in the different storage areas, determine operation times that falls within a preset time period from among the monitored operation times, and determine local files corresponding to the operation times that fall within the preset time period as the monitored local files in the different storage areas.

10. The apparatus of claim 9, wherein the respective operation times comprises at least one of respective times of browsing, respective times of update, respective times of download, and respective times of creation of the local files.

11. The apparatus of claim 8, wherein the monitoring module is configured to monitor local files of a designated type in the different storage areas, wherein the local files of the designated type comprise media files and/or text files.

12. A local file access apparatus comprising:
an acquisition module configured to acquire pre-stored file paths from a preset storage area in response to receiving an instruction of acquiring local files inputted by a user, the preset storage area being independent of storage areas corresponding to applications APPs; and
an access module configured to access the local files corresponding to the file paths according to the file paths.

13. The apparatus of claim 12, wherein the apparatus further comprises a presentation module configured to present file identifiers of the accessed local files.

14. The apparatus of claim 13, wherein the presentation module is configured to determine operation times of the accessed local files, determine respective time differences between the operation times and a current time for the determined operation times, order the file identifiers of the local files according to an ascending order of the time differences, and present the ordered file identifiers.
